# EUROPEAN PATENT SPECIFICATION

(11) **EP 2 567 882 B1**
(45) Date of publication and mention of the grant of the patent: **15.10.2014**
(21) Application number: 12179835.9
(22) Date of filing: 09.08.2012
(51) Int. Cl.: B62D 33/037, E05C 3/04

(54) **Hooking unit for an openable sideboard of an industrial vehicle**
Riegel für die Seitenwand eines Lastkraftwagens
Verrouillage de paroi latérale de véhicule industriel

(30) Priority: 06.09.2011 IT VR20110174
(43) Date of publication of application: 13.03.2013
(73) Proprietor: Natali, Gianfranco, 6924 Sorengo (CH)
(72) Inventor: Natali, Gianfranco, 6924 Sorengo (CH)
(74) Representative: Ponchiroli, Simone

(56) References cited:
- BE-A- 434 443
- CH-A- 267 548
- DE-A1- 1 555 700
- DE-U1-202009 008 248
- FR-E- 2 401
- GB-A- 180 472
- US-A- 4 061 371

## Description

This invention relates to a vehicle body, in particular the body of an industrial vehicle, equipped with at least one openable side board and a hooking unit designed to lock the side board in the closed position.

In particular, this invention relates to a vehicle body in which the hooking unit is of the type comprising a rotary hooking element having a first end which can be operated by the user and a second end designed to hook onto a fixed contact element. Normally, for fastening units of this type the hooking element must be moved in a plane substantially coplanar with one of the side boards of the vehicle body. An example is shown in CH267548.

According to the prior art solutions, the hooking unit usually comprises a supporting body which can be fixed to the openable side board or to another part of the vehicle body, and a hooking element rotatably connected to the supporting body at an intermediate portion of said element (usually closer to the second end than the first end). The hooking element can rotate between a locking position in which its second end engages with the fixed contact element (normally in said position the hooking element, which has an elongate shape, is substantially horizontal), and a releasing position in which the second end is disengaged from the fixed contact element.

To prevent accidental opening of the side board, in some solutions the part of the hooking unit located between the connection to the supporting body and the first end is elastically deformable perpendicularly to the lying plane and comprises a projecting element which is also perpendicular to the lying plane and which is designed to be inserted, in the locking position, in a corresponding seat made in the supporting body. Consequently, to open the side board the operator must first deform the hooking element to free the projecting element from the seat, and then rotate the hooking element.

However, this prior art technology has several disadvantages.

First, to guarantee correct closing of the side board, all of the parts must be made and mounted with great precision so as to avoid creating any play between the hooking element and the fixed contact element, which obviously increases production costs. Otherwise, even if closed, the side board may tend to move relative to the rest of the vehicle body. Consequently, when the vehicle moves, every small rough patch of ground the vehicle passes over causes the vehicle body to make troublesome noises, whilst troublesome vibrations are produced when the vehicle is stationary with the engine running.

Second, prior art fastening units are negatively affected by the tensions created after movement of the vehicles when the vehicle bodies undergo significant elastic deformations which tend to be discharged at connecting points and in particular on fastening units.

Third, prior art fastening units are subject to rapid deterioration of the rotary connection between the supporting body and the hooking element.

In this context the technical purpose which forms the basis of this invention is to provide a vehicle body which overcomes the above-mentioned disadvantages.

In particular, the technical purpose of this invention is to provide a vehicle body which allows optimum closing of its openable side boards to be achieved even with relatively high production tolerances.

It is also the technical purpose of this invention to provide a vehicle body in which the hooking unit is less affected than the prior art solutions by the deformations suffered by the vehicle body during vehicle movement.

It is also the technical purpose of this invention to provide a vehicle body whose side boards make less noise while the vehicle is moving.

The technical purpose specified and the aims indicated are substantially achieved by a vehicle body made as described in the appended claims. Further features and the advantages of this invention are more apparent in the detailed description, with reference to the accompanying drawings which illustrate several preferred, non-limiting embodiments of a vehicle body, in which:
- Figure 1 is a schematic front view of a hooking unit made in accordance with a first embodiment of this invention, applied to a vehicle body;
- Figure 2 is a bottom view of the hooking unit of Figure 1;
- Figure 3 is a cross-section according to the line III - III of the hooking unit of Figure 2;
- Figure 4 is a front view of a first alternative embodiment of the hooking unit of Figure 2 in a locking position;
- Figure 5 is front view of the hooking unit of Figure 4, in cross-section according to the line V - V;
- Figure 6 is a front view of the hooking unit of Figure 4 in a releasing position;
- Figure 7 is a cross-section according to the line V - V of Figure 2 of the hooking unit of Figure 6;
- Figure 8 is a cross-section according to the line V - V of a second alternative embodiment of the hooking unit of Figure 2;
- Figure 9 illustrates the hooking unit of Figure 8 in a position similar to that of the hooking unit of Figure 7;
- Figure 10 is a cross-section according to the line III - III of Figure 2 of the hooking unit of Figures 8 and 9;
- Figure 11 is an exploded schematic axonometric view of a second embodiment of this invention seen from the side facing towards the outside of the vehicle body; and
- Figure 12 is an axonometric view seen from the side facing towards the inside of the vehicle body in the embodiment of Figure 11.

With reference to the accompanying drawings, the numeral 1 denotes in its entirety a hooking unit for the side boards of industrial vehicle bodies according to this invention.

This patent application relates to a vehicle body 6 equipped with the hooking unit 1 and a vehicle fitted with a body 6 equipped with the hooking unit 1.

In both cases the vehicle body 6 comprises at least one openable side board 4 and at least one hooking unit 1 for locking the openable side board 4 in a closed position.

The hooking unit 1 may be fixed to the openable side board 4 or to another part 5 of the vehicle body 6, whilst at least one fixed contact element 10 is respectively fixed to said other part 5 of the vehicle body 6 or to the openable side board 4.

Similarly to the prior art hooking units, the hooking unit according to this invention also comprises, in general, a supporting body 2 and a hooking element 3 rotatably connected to the supporting body 2.

In general, as already indicated, the supporting body 2 in use can be fixed either to the openable side board 4 whose closing it must guarantee, or to another part 5 of the vehicle body 6, such as a fixed part or another openable side board 4. It may also be integrated in the openable side board 4 or in the other part 5 (it may even be formed directly by the side board 4 itself or by the other part 5).

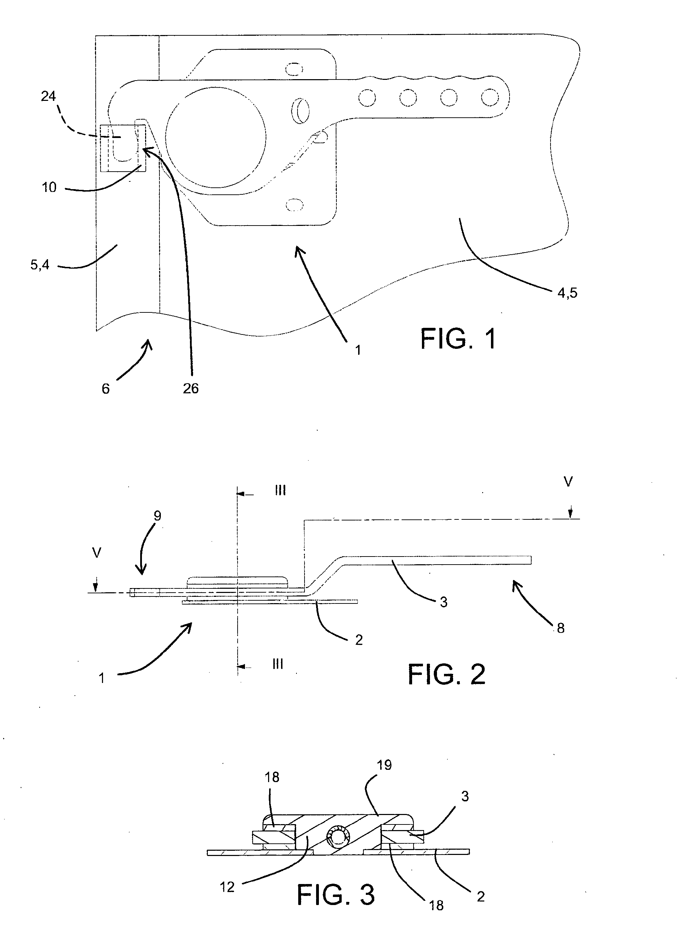

The following is a description first of the first embodiment of this invention, illustrated in Figures 1 to 10. Although most of what is described with reference to the first embodiment may also apply to the second embodiment, the differences between the second and first embodiments will then be highlighted.

According to the first embodiment, the supporting body 2 comprises a substantially flat flange with several holes 7 in it for fixing to the vehicle body 6. Advantageously, said holes 7 are slot-shaped to allow a certain adjustment of the position of the hooking unit 1 during mounting.

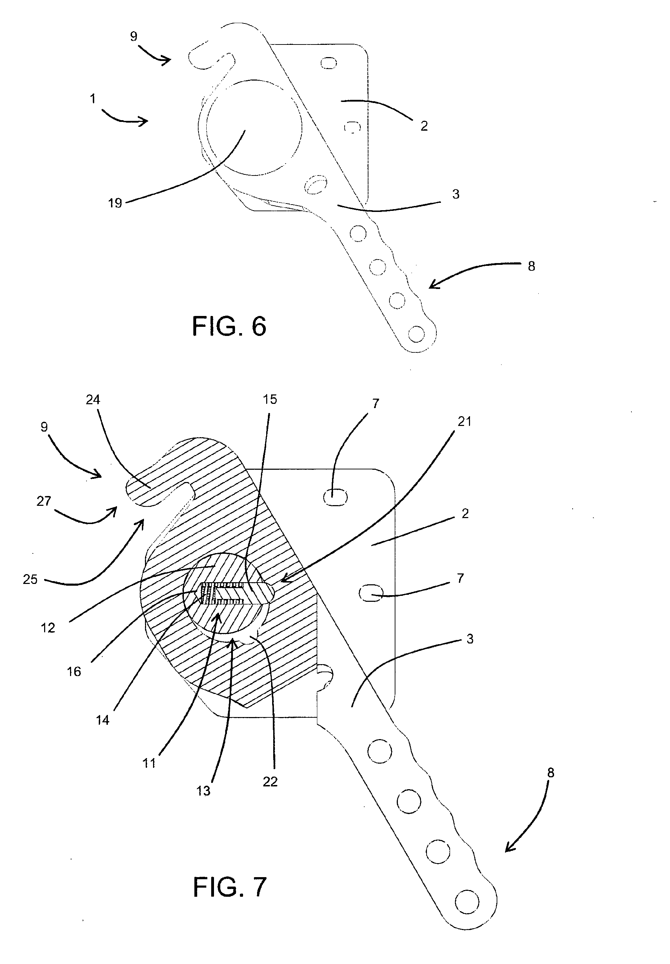

The hooking element 3 is rotatably connected to the supporting body 2 according to a main axis of rotation which is perpendicular to the plane of Figure 1 and lies in the plane of the cross-section III - III of Figure 2. The hooking element 3 can rotate relative to the supporting body 2 at least between a locking position (Figures 1, 2, 4, 5 and 8) and a releasing position (Figures 6, 7 and 9).

In fact, the hooking element 3, which advantageously has an elongate shape, comprises a first end 8, which in use is designed to be operated by a user for rotating the hooking element 3 between the locking position and the releasing position, and a second end 9 which in use can be hooked to the fixed contact element 10 when the hooking element 3 is in the locking position. The fixed contact element 10 is fixed to a part of the vehicle body 6 other than that to which the hooking unit 1 is fixed, for example a fixed part such as an upright or an openable side board.

In accordance with the innovative aspect of this invention, the hooking element 3, at least when it is in the locking position, is also able to move, relative to the supporting body 2, in a direction of sliding which is substantially orthogonal to the main axis of rotation (horizontally in Figures 1, 4, 5 and 8). In particular, it can move between an extended position (not illustrated) and a retracted position (Figures 1, 4, 5 and 8). When the hooking element 3 is in the extended position its second end 9 is further from the main axis of rotation than when it is in the retracted position. In other words, with reference to Figures 1, 4, 5 and 8, in the extended position the second end 9 of the hooking element 3 is translated to the left compared with what is illustrated.

Also according to the innovative aspect of this invention, the hooking unit 1 also comprises elastic return means 11 interposed between the supporting body 2 and the hooking element 3 and acting in such a way as to push the hooking element 3 towards the retracted position.

The hooking unit 1 also comprises a pin 12 fixed to the supporting body 2 to which the hooking element 3 is rotatably connected. Depending on requirements, the pin 12 may be fixed to the supporting body 2 in any way. However, in the embodiment illustrated in Figures 1 to 10, it is fixed by welding, riveting or screwing.

To guarantee the rotary - sliding coupling between the pin 12 and the hooking element 3, the hooking element 3 comprises, at an intermediate portion of it between the first end 8 and the second end 9, a housing 13 rotatably and slidably associated with the pin 12. Advantageously, the housing 13, if observed parallel with the main axis of rotation, has an elongate shape, its width substantially equal to the diameter of the pin 12 at the housing 13 itself and its length greater than said diameter so as to allow substantially unidirectional sliding between the pin 12 and the hooking element 3.

Since in the preferred embodiments the hooking element 3 is a shaped plate (Figure 2), the housing 13 is a through hole made in the plate. Advantageously, the elastic return means 11 are also positioned at the housing 13.

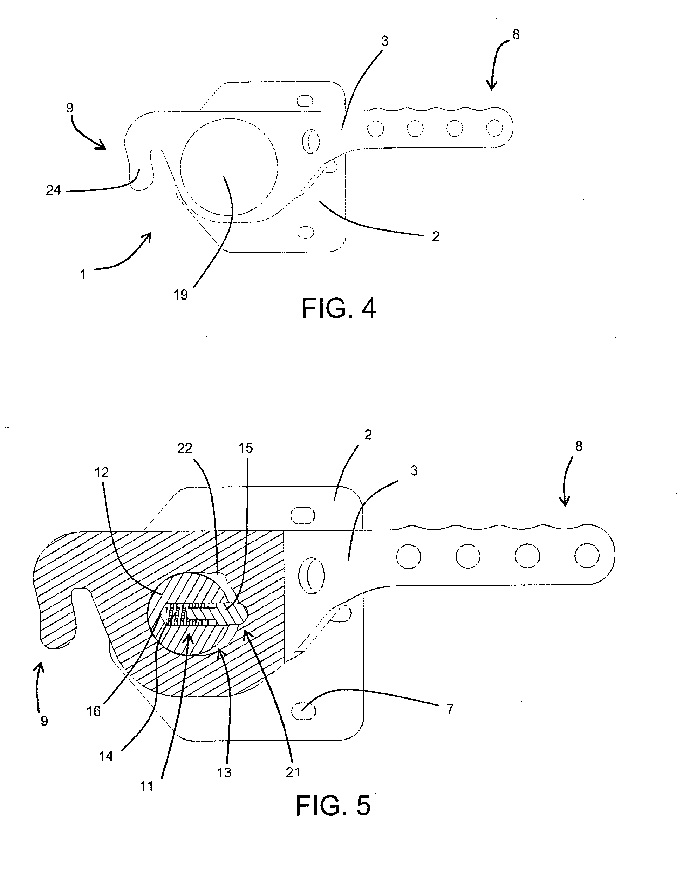

According to a first alternative embodiment, the elastic return means 11 comprise at least one helical spring 14 positioned radially relative to the main axis of rotation and fixed to the pin 12 or to the hooking element 3, and a stop head 15 fixed to the helical spring 14 and stopping in contact respectively against the hooking element 3 or the pin 12. In particular, in the embodiment illustrated in Figures 4 to 7, the helical spring 14 is inserted in a radial hole 16 made in the pin 12. The head 15 is also partly inserted in said hole 16 in a slidable fashion, the part of the head inside the radial hole 16 being coupled to the helical spring 14 and the part of the head outside the radial hole 16 instead being shaped (for example semi-cylindrical or hemispherical) and slidably coupled to the inner part of the housing 13. However, in other embodiments the head 15 could also have the shape of a roller or could even be integrated in the spring by suitably shaping it. In general, the at least one helical spring 14 is positioned in such a way as to act substantially perpendicularly relative to the main axis of rotation.

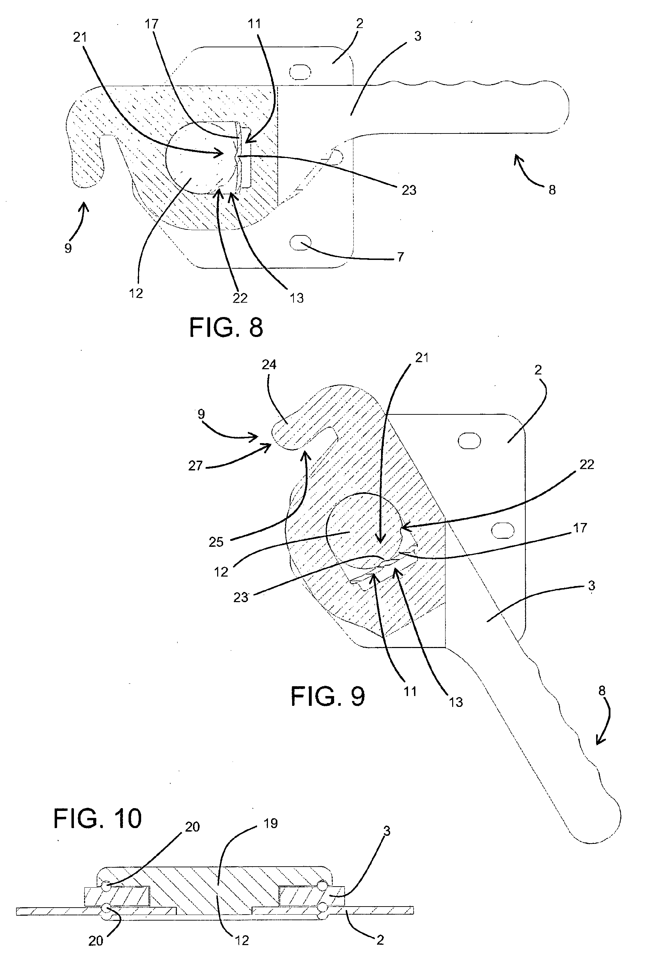

In contrast, according to a second embodiment, the elastic return means 11 comprise at least one flat spring 17 mounted in the housing 13 and in contact with the pin 12 (Figures 8 and 9).

The housing 13 is sealed to guarantee reduced deterioration as time passes of the connection between the supporting body 2 and the hooking element 3 compared with prior art solutions.

According to a first embodiment illustrated in Figure 3, that may be achieved using a pair of shim rings 18 which are mounted around the pin 12, one between the hooking element 3 and the supporting body 2, and one between the hooking element 3 and an enlarged end 19 of the pin 12. Preferably, each shim ring 18 has a slightly concave shape with the concavity facing towards the hooking element 3 and is elastically deformable in such a way as to be able reduce its concavity. In fact, in this way, the seal can be guaranteed irrespective of the tolerances which apply during mounting of the hooking unit 1, when the shim rings 18 and the hooking element 3 are packed between the supporting body 2 and the enlarged end 19 of the pin 12.

In contrast, according to a second alternative embodiment illustrated in Figure 10, the seal is guaranteed by a pair of O-rings 20 which are mounted around the pin 12, one between the hooking element 3 and the supporting body 2, and one between the hooking element 3 and an enlarged end 19 of the pin 12. Advantageously, the supporting body 2, the enlarged end 19 and the hooking element 3 are also equipped with special grooves for housing the O-rings 20.

Although in the accompanying drawings the shim rings 18 and the O-rings 20 are presented respectively combined with the first embodiment and the second embodiment of the elastic return means 11, in other embodiments there may also be other combinations.

There are fixing means 21 for fixing the hooking element 3 in the locking and/or in the releasing position at least in the absence of external stresses. In particular, the fixing means 21 are made in such a way as to keep the hooking element 3 in the locking and/or releasing position until the torque applied to the hooking element 3 exceeds a predetermined value.

With reference to the first alternative embodiment described above, the fixing means 21 comprise respectively one or two shaped seats 22 made in the hooking element 3 or in the pin 12, respectively if the helical spring 14 and the stop head 15 are coupled to the pin 12 or to the hooking element 3. In the accompanying drawings the seats 22 are made in the hooking element 3. Each seat 22, which is advantageously shaped to match the stop head 15, is also positioned in such a way that it is aligned with the stop head 15 when the hooking element 3 is respectively in the locking position or in the releasing position.

In fact, in this way, the stop head 15 can be inserted in the seats 22 when the hooking element 3 is in the locking position and/or in the releasing position.

To allow movement of the hooking element, the stop head 15 is shaped to be able to come out of the seat 22 when the torque applied to the hooking element 3 so as to rotate the latter exceeds a predetermined threshold value.

In the case of the second alternative embodiment mentioned above (Figures 8 and 9), the fixing means 21 advantageously adopt a configuration similar to that just described. In fact, in this case, the fixing means 21 comprise at least one shaped seat 22 which is respectively made in the pin 12 or in the flat spring 17, and at least one projecting element 23 shaped to match the seat 22 and respectively fixed to the flat spring 17 or to the pin 12. The projecting element 23 is such that it can be coupled to the seat 22 when the hooking element 3 is respectively in the locking position or in the releasing position.

In the accompanying drawings, in particular, the projecting element 23 is fixed to a central portion of the flat spring 17, whilst the seats 22 are made in the pin 12.

In all cases, the seat 22 corresponding to the releasing position may be shaped (for example less deep) in such a way that it makes uncoupling from the head 15 or from the projecting element 23 easier than in the case of the locking position.

Returning to the hooking element 3, in the preferred embodiment, its second end 9 comprises a tooth 24 which in use can be coupled to the fixed contact element 10. For that purpose, the tooth 24 comprises a face 25, facing towards the main axis of rotation, which is convex in such a way that, in the locking position, it is substantially at a tangent to a plane which is at the same time substantially parallel with the main axis of rotation and substantially perpendicular to a line that is radial relative to the main axis of rotation. In this way, the contact between the tooth 24 and the fixed contact element 10 is concentrated at the tangent zone 26, since the fixed contact element 10 extends substantially in that plane.

The free end 27 of the tooth 24 is also shaped with a decreasing cross-section so as to facilitate coupling with the fixed contact element 10 during closing.

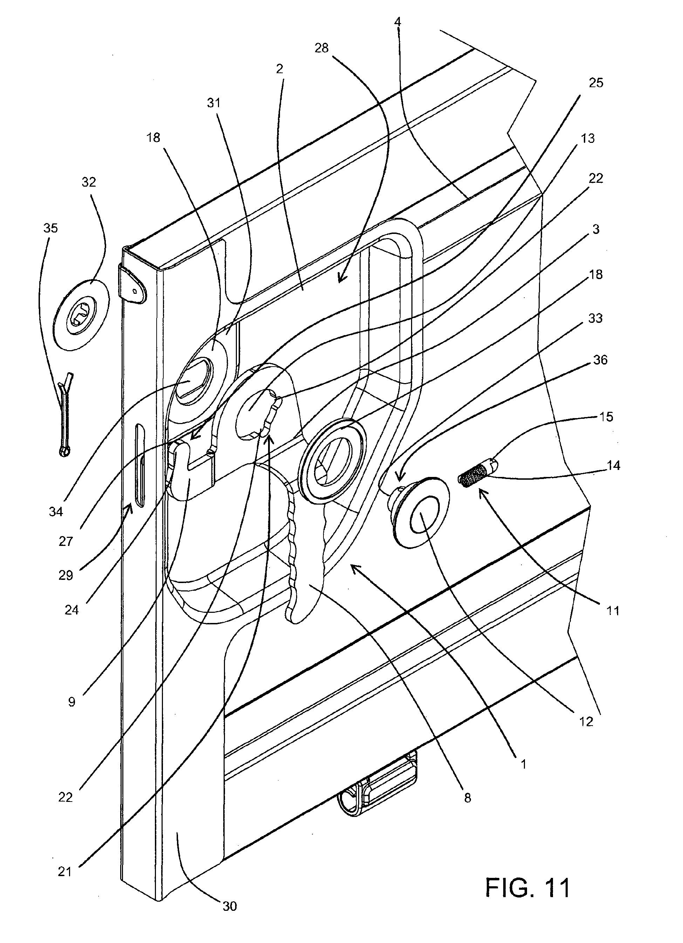

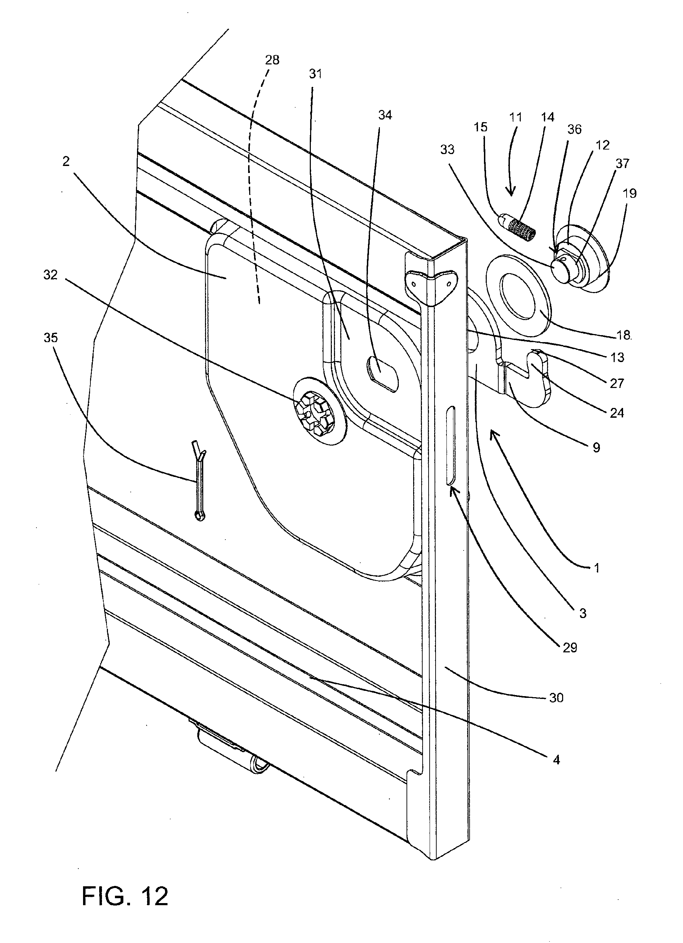

As already indicated, what is described above mostly also applies to the second embodiment illustrated in Figures 11 and 12, where corresponding elements are labelled with the same reference characters as those used for the first embodiment. Therefore, hereinafter only the differences between the second embodiment and the first embodiment are highlighted. For anything that is not expressly indicated, it shall be understood that the above description applies.

The first difference in the second embodiment illustrated in Figures 11 and 12 compared with the first embodiment is the shape of the supporting body 2. In fact, in this case, it is not a flat plate, but a shaped element forming a recess 28 whose depth is substantially equal to the thickness of the side board 4 and in which the other operating parts of the hooking unit 1 are inserted, in particular the hooking element 3 (advantageously again in this case comprising a piece of shaped sheet metal) whose second end 9 comes out of the supporting body 2 through a slit 29. Moreover, in the embodiment illustrated, the supporting body 2 also forms the end side of the side board 30.

Moreover, in the recess 28, it is possible to identify a raised zone 31 where the pin 12 is fixed to the supporting body 2.

Regarding pin 12 fixing, although as already indicated this can be achieved in many different ways, advantageously it is performed in such a way that the position of the pin 12 relative to the supporting body 2 can be selectively varied in the direction of action of the elastic return means 11 when the hooking element 3 is in the locking position. In particular, in the preferred embodiment it is achieved by screwing a nut 32 on a threaded end 33 of the pin 12 which is opposite to the enlarged head 19 and inserted through a through slot 34 made in the supporting body 2. Once the nut 32 has been tightened, its accidental unscrewing is prevented by a split pin 35 inserted in a through hole 36 made in the threaded end 33. Moreover, advantageously, the nut 33 is of the castellated type and the split pin 35 is inserted in diametrically opposed slits. The height of the nut 32 is substantially equal to the height of the raised zone 31 in such a way that it does not project from the dimensions defined by the supporting body 2.

Also, as indicated, the pin 12 is inserted in a through slot 34, and advantageously a section 37 of the pin, interposed between the threaded end 33 and the zone intended for coupling to the hooking element 3, has, perpendicularly to the axis of the pin 12, a shape similar to that of the slot 34 but shorter, and along the axis a dimension not greater than the thickness of the supporting body 2. In this way, during assembly or maintenance, before tightening the nut 32 the section 37 of the pin may be made to slide in a guided fashion to the correct position for correct coupling between the tooth 24 and the fixed contact element 10. In contrast, once the nut 32 has been tightened, further sliding of the section 37 relative to the slot 34 is prevented. Finally, as shown in Figures 11 and 12, even in the second embodiment, on one side the housing 13 is sealed closed, and on the other the fixing means 21 are present. In any case, beyond the specific solutions adopted in the accompanying drawings, for both aspects all of the assessments expressed relative to the various alternative embodiments on the first embodiment apply.

As regards operation of the vehicle body 6 according to this invention, and in particular of the hooking unit 1 used in it, the passage from the locking position to the releasing position and vice versa is achieved by means of a corresponding rotation of the hooking element 3. In both cases, if the fixing means 21 are present, disengagement from the locking position and from the releasing position can only occur when the torque applied to the hooking element 3 is such that it allows the release of the head 15 or of the projecting element 23 from the respective seat 22, overcoming the resistance of the respective spring.

In contrast, the elastic return means 11 may intervene mainly in two circumstances: at the moment of passing to the locking position, and as the vehicle is driving along with the hooking element 3 in the locking position.

In the former case, allowing the tooth 24 to shift towards the extended position, they allow any inaccuracies in the reciprocal positioning of the hooking unit 1 and the fixed contact element 10 to be compensated for.

In contrast, in the latter case, when after the vehicle has been moved there are deformations in the vehicle body 6 which cause a modification of the reciprocal position of the hooking unit 1 and the fixed contact element 10, the elastic return means 11 allow shifting of the hooking element 3 to match said deformation and avoid breakages, also guaranteeing constant contact between the hooking element 3 and the fixed contact element 10, preventing the production of troublesome vibrations.

Moreover, in that circumstance the convex shape of the tooth 24 is also advantageous, also allowing relative rotations of the tooth 24 and the fixed contact element 10 about the above-mentioned tangent point.

This invention therefore provides important advantages, since on one hand it allows any construction tolerances to be compensated for and on the other hand it allows improved adaptation of the vehicle body to deformations, with consequent reduced noise from the vehicle body both during vehicle movement and when the vehicle is stationary with the engine running. Moreover, in particular in the second embodiment illustrated, the coupling between the hooking element and the related contact element can be easily adjusted both during production and during after-sales maintenance.

Finally, it should be noticed that this invention is relatively easy to produce and that even the cost linked to implementing the invention is not very high.

## Claims

1. A vehicle body comprising:
at least one openable side board (4);
at least one hooking unit (1) for locking the openable side board (4) in a closed position, fixed to the openable side board (4) or to another part (5) of the vehicle body (6); and
at least one fixed contact element (10) which is respectively fixed to said other part (5) of the vehicle body (6) or to the openable side board (4);
the hooking unit in turn comprising:
a supporting body (2) which is fixed to, or integrated in, said openable side board (4) or said other part (5) of the vehicle body (6); and
a hooking element (3) rotatably connected to the supporting body (2) according to a main axis of rotation, and able to rotate between a locking position and a releasing position;
the hooking element (3) comprising a first end (8), which in use can be operated by a user for rotating the hooking element (3) between the locking position and the releasing position, and a second end (9) which in use can be hooked to the fixed contact element (10);
**characterised in that** the hooking element (3), at least in the locking position, is also able to move, relative to the supporting body (2), in a direction of sliding which is substantially orthogonal to the main axis of rotation, between an extended position and a retracted position, in the extended position the second end (9) being further from the main axis of rotation than when it is in the retracted position, **in that** it also comprises elastic return means (11) interposed between the supporting body (2) and the hooking element (3) for pushing the hooking element (3) towards the retracted position, **in that** it comprises a pin (12) fixed to the supporting body (2), **in that** the hooking element (3), at an intermediate portion of it between the first end (8) and the second end (9), comprises a housing (13) rotatably and slidably associated with the pin (12) and sealed, and also **in that** the elastic return means (11) are also positioned at said housing (13).

2. The vehicle body according to claim 1, **characterised in that** the elastic return means (11) comprise at least one helical spring (14) positioned in such a way that it acts substantially radially relative to the main axis of rotation and fixed to the pin (12) or to the hooking element (3), and a stop head (15) fixed to the helical spring (14) and stopping in contact respectively against the hooking element (3) or the pin (12).

3. The vehicle body according to claim 2, **characterised in that** the helical spring (14) is inserted in a radial hole (16) made in the pin (12) in which the head (15) is also partly inserted in a slidable fashion, the part of the head outside the radial hole (16) being shaped and slidably coupled to the inner part of the housing (13).

4. The vehicle body according to claim 1, **characterised in that** the elastic return means (11) comprise at least one flat spring (17) mounted in the housing (13) and in contact with the pin (12).

5. The vehicle body according to any of the foregoing claims, **characterised in that** it also comprises a pair of shim rings (18) which are mounted around the pin (12), one between the hooking element (3) and the supporting body (2), and one between the hooking element (3) and an enlarged end (19) of the pin (12), for sealing the housing (13).

6. The vehicle body according to claim 5, **characterised in that** each of the shim rings (18) has a concave shape, the concavity facing towards the hooking element (3), and can be elastically deformed to reduce its concavity.

7. The vehicle body according to any of the claims from 1 to 4, **characterised in that** it also comprises a pair of O-rings (20) which are mounted around the pin (12), one between the hooking element (3) and the supporting body (2), and one between the hooking element (3) and an enlarged end (19) of the pin (12), for sealing the housing (13).

8. The vehicle body according to any of the foregoing claims, **characterised in that** it also comprises fixing means (21) for fixing the hooking element (3) in the locking and/or in the releasing position at least in the absence of external stresses.

9. The vehicle body according to claims 2 and 8, **characterised in that** the fixing means (21) respectively comprise one or two shaped seats (22) which are respectively made in the hooking element (3) or in the pin (12), and in which the stop head (15) may be inserted when the hooking element (3) is respectively in the locking and/or in the releasing position, and also being **characterised in that** the stop head (15) is shaped to be able to come out of the seat (22) when the torque applied to the hooking element (3) so as to rotate it exceeds a predetermined threshold value.

10. The vehicle body according to claims 4 and 8, **characterised in that** the fixing means (21) comprise at least one shaped seat (22) which is respectively made in the pin (12) or in the flat spring (17), and at least one projecting element (23) shaped to match the seat (22) and respectively fixed to the flat spring (17) or to the pin (12), the projecting element (23) being coupled to the seat (22) when the hooking element (3) is respectively in the locking position or in the releasing position.

11. The vehicle body according to any of the foregoing claims, **characterised in that** the second end (9) of the hooking element (3) comprises a tooth (24) which can be coupled to the fixed contact element (10), and also being **characterised in that** the tooth (24) comprises a face (25) which is facing towards the main axis of rotation and is convex in such a way that, in the locking position, it is substantially at a tangent to a plane which is substantially parallel with the main axis of rotation and which is substantially perpendicular to a line which is radial relative to the main axis of rotation.

12. The vehicle body according to any of the foregoing claims, **characterised in that** the position of the pin (12) relative to the supporting body (2) can be selectively varied in the direction of action of the elastic return means (11) when the hooking element (3) is in the locking position.

13. The vehicle body according to any of the foregoing claims, **characterised in that** it is an industrial vehicle body.

14. A vehicle comprising a vehicle body according to any of the foregoing claims.

## Patentansprüche

1. Kraftfahrzeugkasten, enthaltend:
- wenigstens eine zu öffnende Seitenwand (4);
- wenigstens eine Einhakeinheit (1) zum Blockieren der zu öffnenden Seitenwand (4) in einer geschlossenen Position, befestigt an der zu öffnenden Seitenwand (4) oder an einem anderen Teil (5) des Kraftfahrzeugkastens (6); und
- wenigstens ein feststehendes Anschlagelement (10), welches jeweils an dem genannten anderen Teil (5) des Kraftfahrzeugkastens (6) oder an der zu öffnenden Seitenwand (4) befestigt ist:
wobei die Einhakeinheit wiederum enthält:
- einen Haltekörper (2), welcher an der genannten zu öffnenden Seitenwand (4) oder an dem genannten anderen Teil (5) des Fahrzeugkastens (6) befestigt oder darin integriert ist; und
- ein Hakenelement (3), drehbar angeschlossen an den Haltekörper (2) in Übereinstimmung mit einer Hauptdrehachse und in der Lage, sich zwischen einer Feststellposition und einer Freigabeposition zu drehen;
wobei das Hakenelement (3) ein erstes Ende (8) enthält, welches im Betrieb von einem Benutzer betätigt werden kann, um das Hakenelement (3) zwischen einer Feststellposition und einer Freigabeposition zu drehen, und ein zweites Ende (9), welches im Betrieb in das feststehende Anschlagelement (10) eingehakt werden kann;
**dadurch gekennzeichnet, dass** das Hakenelement (3) wenigstens in der Feststellposition auch in der Lage ist, sich im Verhältnis zu dem Haltekörper (2) in einer Gleitrichtung zu bewegen, welche im wesentlichen rechtwinklig zu der Hauptdrehachse verläuft, und zwar zwischen einer ausgestreckten Position und einer zurückgezogenen Position, wobei das zweite Ende (9) in der ausgestreckten Position weiter von der Hauptdrehachse entfernt ist als in der zurückgezogenen Position, und dadurch, dass ausserdem elastische Rückholmittel (11) vorhanden sind, eingesetzt zwischen dem Haltekörper (2) und dem Hakenelement (3), um das Hakenelement (3) in Richtung der zurückgezogenen Position zu drücken, und dadurch, dass ein Zapfen (12) enthalten ist, befestigt an dem Haltekörper (2), und dadurch, dass das Hakenelement (3) an einem mittleren Abschnitt desselben zwischen dem ersten Ende (8) und dem zweiten Ende (9) einen Aufnahmesitz (13) enthält, drehbar und gleitbar dem Zapfen (12) zugeordnet und abgedichtet, und auch dadurch, dass die elastischen Rückholmittel (11) ebenfalls an dem genannten Aufnahmesitz (13) angeordnet sind.

2. Kraftfahrzeugkasten nach Patentanspruch 1, **dadurch gekennzeichnet, dass** die elastischen Rückholmittel (11) wenigstens eine Schneckenfeder (14) enthalten, positioniert auf solche Weise, dass sie im wesentlichen radial im Verhältnis zu der Hauptdrehachse wirkt und an dem Zapfen (12) oder an den Hakenelement (3) befestigt ist, sowie einen Sperrkopf (15), der an der Schneckenfeder (14) befestigt ist und im Kontakt jeweils gegen das Hakenelement (3) oder gegen den Zapfen (12) drückt.

3. Kraftfahrzeugkasten nach Patentanspruch 2, **dadurch gekennzeichnet, dass** die Schneckenfeder (14) in eine radial verlaufende und in den Zapfen (12) eingearbeitete Bohrung (16) eingesetzt ist, in welche auch der Kopf (15) zum Teil und in gleitbarer Weise eingesetzt ist, wobei der ausserhalb der radialen Bohrung (16) liegende Teil des Kopfes geformt und gleitbar mit dem inneren Teil des Aufnahmesitzes (13) verbunden ist.

4. Kraftfahrzeugkasten nach Patentanspruch 1, **dadurch gekennzeichnet, dass** die elastischen Rückholmittel (11) wenigstens eine Blattfeder (17) enthalten, montiert in dem Aufnahmesitz (13) und im Kontakt mit dem Zapfen (12).

5. Kraftfahrzeugkasten nach einem jeden der vorstehenden Patentansprüche, **dadurch gekennzeichnet, dass** er ebenfalls ein Paar von Passscheiben (18) enthält, welche um den Zapfen (12) montiert sind, und zwar eine zwischen dem Hakenelement (3) und dem Haltekörper (2), und eine zwischen dem Hakenelement (3) und einem verbreiterten Ende (19) des Zapfens (12, um den Aufnahmesitz (13) abzudichten.

6. Kraftfahrzeugkasten nach Patentanspruch 5, **dadurch gekennzeichnet, dass** jede der Passscheiben (18) eine konkave Form hat, wobei die Konkavität dem Hakenelement (3) zugewandt ist, und sie kann elastisch verformt werden, um ihre Konkavität zu reduzieren.

7. Kraftfahrzeugkasten nach einem jeden der vorstehenden Patentansprüche von 1 bis 4, **dadurch gekennzeichnet, dass** er auch ein Paar von O-Ringen (20) enthält, welche um den Zapfen (12) montiert sind, und zwar einer zwischen dem Hakenelement (3) und dem Haltekörper (2), und einer zwischen dem Hakenelement (3) und einem verbreiterten Ende (19) des Zapfens (12, um den Aufnahmesitz (13) abzudichten.

8. Kraftfahrzeugkasten nach einem jeden der vorstehenden Patentansprüche, **dadurch gekennzeichnet, dass** er ebenfalls Befestigungsmittel (21) enthält, um das Hakenelement (3) in der Feststellposition und/oder in der Freigabeposition wenigstens bei Fehlen von äusseren Belastungen zu befestigen.

9. Kraftfahrzeugkasten nach den Patentansprüchen 2 und 8, **dadurch gekennzeichnet, dass** die Befestigungsmittel (21) jeweils einen oder zwei geformte Sitze (22) enthalten, welche jeweils in das Hakenelement (3) oder in den Zapfen (12) eingearbeitet sind, und in welche der Sperrkopf (15) einrasten kann, wenn sich das Hakenelement (3) jeweils in der Feststellposition und/oder in der Freigabeposition befindet, und wobei er ebenfalls **dadurch gekennzeichnet ist, dass** der Sperrkopf (15) so geformt ist, dass er in der Lage ist, aus dem Sitz (22) herauszukommen, wenn das auf das Hakenelement (3) ausgeübte Moment, um dieses zu drehen, einen vorgegebenen Schwellenwert überschreitet.

10. Kraftfahrzeugkasten nach den Patentansprüchen 4 und 8, **dadurch gekennzeichnet, dass** die Befestigungsmittel (21) wenigstens einen geformten Sitz (22) enthalten, welcher jeweils in den Zapfen (12) oder in die Blattfeder (17) eingearbeitet ist, sowie wenigstens ein hervorstehendes Element (23), dass passrecht zu dem Sitz (22) geformt und jeweils an der Blattfeder (17) oder an dem Zapfen (12) befestigt ist, wobei das hervorstehende Element (23) mit dem Sitz (22) verbunden wird, wenn sich das Hakenelement (3) jeweils in der Feststellposition oder in der Freigabeposition befindet.

11. Kraftfahrzeugkasten nach einem jeden der vorstehenden Patentansprüche, **dadurch gekennzeichnet, dass** das zweite Ende (9) des Hakenelementes (3) einen Zahn (24) enthält, der mit dem feststehenden Anschlagelement (10) verbunden werden kann, und ebenfalls **dadurch gekennzeichnet, dass** der Zahn (24) eine Fläche (25) aufweist, welche der Hauptdrehachse zugewandt und auf solche Weise konvex ist, dass sie sich in der Feststellposition im wesentlichen tangential zu einer Ebene befindet, welche im wesentlichen parallel zu der Hauptdrehachse verläuft, und welche im wesentlichen lotrecht zu einer Linie ist, welche radial im Verhältnis zu der Hauptdrehachse verläuft.

12. Kraftfahrzeugkasten nach einem jeden der vorstehenden Patentansprüche, **dadurch gekennzeichnet, dass** die Position des Zapfens (12) im Verhältnis zu dem Haltekörper (2) wahlweise in der Wirkungsrichtung der elastischen Rückholmittel (11) variiert werden kann, wenn sich das Hakenelement (3) in der Feststellposition befindet.

13. Kraftfahrzeugkasten nach einem jeden der vorstehenden Patentansprüche, **dadurch gekennzeichnet, dass** es sich um einen Lastkraftwagen handelt.

14. Lastkraftwagen, enthaltend einen Kraftfahrzeugkasten nach einem jeden der vorstehenden Patentansprüche.

## Revendications

1. Une carrosserie de véhicule comprenant :
au moins une paroi latérale ouvrable (4) ;
au moins une unité d'accrochage (1) pour bloquer la paroi latérale ouvrable (4) dans une position de fermeture, fixée à la paroi latérale ouvrable (4) ou à une autre partie (5) de la carrosserie de véhicule (6) ; et
au moins un élément fixe de contact (10) qui est respectivement fixé à ladite autre partie (5) de la carrosserie de véhicule (6) ou à la paroi latérale ouvrable (4) ; l'unité d'accrochage comprenant à son tour :
un corps de support (2) qui est fixé à, ou intégré dans, ladite paroi latérale ouvrable (4) ou ladite autre partie (5) de la carrosserie de véhicule (6) ; et
un élément d'accrochage (3) associé de façon rotative au corps de support (2) selon un axe de rotation principal, et pouvant tourner entre une position de blocage et une position de déblocage ;
l'élément d'accrochage (3) comprenant une première extrémité (8) qui, en utilisation, peut être actionnée par un utilisateur pour tourner l'élément d'accrochage (3) entre la position de blocage et la position de déblocage, et une deuxième extrémité (9) qui, en utilisation, peut être accrochée à l'élément fixe de contact (10) ;
**caractérisée en ce que** l'élément d'accrochage (3), au moins dans la position de blocage, peut aussi se déplacer, par rapport au corps de support (2), dans une direction de coulissement qui est essentiellement orthogonale à l'axe de rotation principal, entre une position étendue et une position rentrée, dans la position étendue la deuxième extrémité (9) étant plus éloignée de l'axe de rotation principal que lorsqu'elle est dans la position rentrée, **en ce qu'**elle comprend aussi des moyens élastiques de rappel (11) interposés entre le corps de support (2) et l'élément d'accrochage (3) pour pousser l'élément d'accrochage (3) vers la position rentrée, **en ce qu'**elle comprend une goupille (12) fixée au corps de support (2), **en ce que** l'élément d'accrochage (3), au niveau d'une propre portion intermédiaire entre la première extrémité (8) et la deuxième extrémité (9), comprend un logement (13) associé de façon rotative et coulissante à la goupille (12) et hermétiquement fermé, et également **en ce que** les moyens élastiques de rappel (11) sont aussi positionnés au niveau dudit logement (13).

2. La carrosserie de véhicule selon la revendication 1, **caractérisée en ce que** les moyens élastiques de rappel (11) comprennent au moins un ressort hélicoïdal (14) positionné de manière à ce qu'il agisse essentiellement radialement par rapport à l'axe de rotation principal et fixé à la goupille (12) ou à l'élément d'accrochage (3), et une tête d'arrêt (15) fixée au ressort hélicoïdal (14) et venant en butée respectivement contre l'élément d'accrochage (3) ou la goupille (12).

3. La carrosserie de véhicule selon la revendication 2, **caractérisée en ce que** le ressort hélicoïdal (14) est inséré dans un trou radial (16) réalisé dans la goupille (12) dans lequel la tête (15) est elle aussi partiellement insérée de façon coulissante, la partie de la tête située en dehors du trou radial (16) étant conformée et accouplée de façon coulissante avec la partie intérieure du logement (13).

4. La carrosserie de véhicule selon la revendication 1, **caractérisée en ce que** les moyens élastiques de rappel (11) comprennent au moins un ressort plat (17) monté dans le logement (13) et en contact avec la goupille (12).

5. La carrosserie de véhicule selon l'une quelconque des revendications précédentes, **caractérisée en ce qu'**elle comprend aussi une paire de rondelles d'épaisseur (18) qui sont montées autour de la goupille (12), une entre l'élément d'accrochage (3) et le corps de support (2), et une entre l'élément d'accrochage (3) et une extrémité élargie (19) de la goupille (12), pour fermer hermétiquement le logement (13).

6. La carrosserie de véhicule selon la revendication 5, **caractérisée en ce que** chacune des rondelles d'épaisseur (18) a une forme concave, la concavité étant orientée vers l'élément d'accrochage (3), et peut être déformée élastiquement pour réduire sa propre concavité.

7. La carrosserie de véhicule selon l'une quelconque des revendications de 1 à 4, **caractérisée en ce qu'**elle comprend aussi une paire de joints toriques (20) qui sont montés autour de la goupille (12), un entre l'élément d'accrochage (3) et le corps de support (2), et un entre l'élément d'accrochage (3) et une extrémité élargie (19) de la goupille (12), pour fermer hermétiquement le logement (13).

8. La carrosserie de véhicule selon l'une quelconque des revendications précédentes, **caractérisée en ce qu'**elle comprend aussi des moyens de fixation (21) pour fixer l'élément d'accrochage (3) dans la position de blocage et/ou de déblocage au moins en l'absence de sollicitations externes.

9. La carrosserie de véhicule selon les revendications 2 et 8, **caractérisée en ce que** les moyens de fixation (21) comprennent respectivement un ou deux logements profilés (22) qui sont respectivement réalisés dans l'élément d'accrochage (3) ou dans la goupille (12), et dans lesquels la tête d'arrêt (15) peut être insérée quand l'élément d'accrochage (3) est respectivement dans la position de blocage et/ou dans la position de déblocage, et étant aussi **caractérisée en ce que** la tête d'arrêt (15) est profilée pour pouvoir sortir du logement (22) quand le couple appliqué à l'élément d'accrochage (3) pour le faire tourner dépasse une valeur de seuil prédéfinie.

10. La carrosserie de véhicule selon les revendications 4 et 8, **caractérisée en ce que** les moyens de fixation (21) comprennent au moins un logement profilé (22) qui est respectivement réalisé dans la goupille (12) ou dans le ressort plat (17), et au moins un élément en saillie (23) conformé pour correspondre au logement (22) et respectivement fixé au ressort plat (17) ou à la goupille (12), l'élément en saillie (23) étant accouplé avec le logement (22) quand l'élément d'accrochage (3) est respectivement dans la position de blocage ou dans la position de déblocage.

11. La carrosserie de véhicule selon l'une quelconque des revendications précédentes, **caractérisée en ce que** la deuxième extrémité (9) de l'élément d'accrochage (3) comprend une dent (24) qui peut être accouplée avec l'élément fixe de contact (10), et étant aussi **caractérisée en ce que** la dent (24) comprend une face (25) qui est orientée vers l'axe de rotation principal et est convexe de manière à ce que, dans la position de blocage, elle soit essentiellement tangente à un plan qui est essentiellement parallèle à l'axe de rotation principal et qui est essentiellement perpendiculaire à une droite qui est radiale par rapport à l'axe de rotation principal.

12. La carrosserie de véhicule selon l'une quelconque des revendications précédentes, **caractérisée en ce que** la position de la goupille (12) par rapport au corps de support (2) peut être sélectivement modifiée dans la direction d'action des moyens élastiques de rappel (11) quand l'élément d'accrochage (3) est dans la position de blocage.

13. La carrosserie de véhicule selon l'une quelconque des revendications précédentes, **caractérisée en ce qu'**il s'agit d'une carrosserie de véhicule industriel.

14. Un véhicule comprenant une carrosserie de véhicule selon l'une quelconque des revendications précédentes.
